# EUROPÄISCHE PATENTSCHRIFT

(11) **EP 0 670 627 B1**
(45) Veröffentlichungstag und Bekanntmachung des Hinweises auf die Patenterteilung: **22.12.1999**
(21) Anmeldenummer: 95103027.9
(22) Anmeldetag: 03.03.1995
(51) Int. Cl.: H02P 1/46

(54) **Verfahren für den Anlauf und die Kommutierung bei Synchronmaschinen**
Method for commutating and starting up synchronous machines
Procédé pour le démarrage et la commutation de machines synchrones

(30) Priorität: 05.03.1994 DE 4407390
(43) Veröffentlichungstag der Anmeldung: 06.09.1995
(73) Patentinhaber: Dr. Johannes Heidenhain GmbH, 83301 Traunreut (DE)
(72) Erfinder: Hentschke, Bernd, Dipl. Ing., D-90762 Fuerth (DE)

(56) Entgegenhaltungen:
- EP-A- 0 251 785
- EP-A- 0 517 393
- CONFERENCE RECORD OF THE 1990 IEEE INDUSTRY APPLICATIONS SOCIETY ANNUAL MEETING, 7.Oktober 1990 - 12.Oktober 1990 SEATTLE, WASHINGTON, Seiten 518-524, M.EHSANI & AL. 'Elimination of discrete position sensor and current sensor in switched reluctance motor drives '

## Beschreibung

Die Erfindung betrifft ein Verfahren für den Anlauf und die Kommutierung bei Synchronmaschinen gemäß dem Oberbegriff des Anspruches 1.

Bei Synchronmaschinen wird der Rotor mit einer räumlich festen Magnetisierung versehen. Diese Magnetisierung wird entweder durch einen Strom in einer Erregerwicklung oder mittels Permanentmagneten vorgegeben.
Der Rotor einer zweipoligen Maschine ist dabei so magnetisiert, daß jeweils ein positiver und ein negativer Pol entsteht, wobei diese Pole gegenüberliegend angeordnet sind. Bei mehrpoligen Maschinen, d.h. bei Polpaarzahlen größer eins wiederholen sich die Verhältnisse entsprechend.

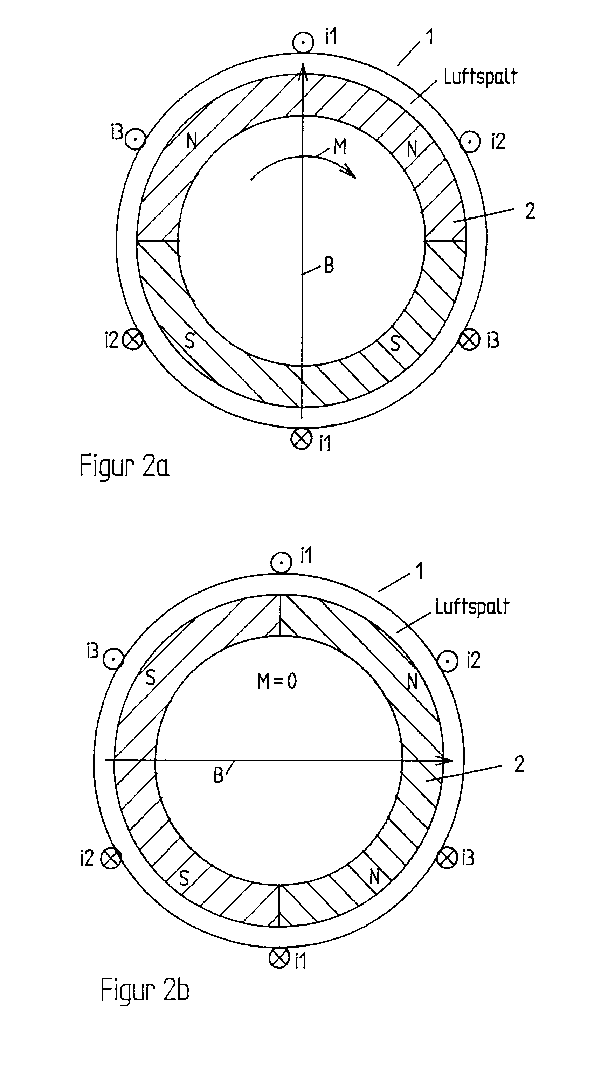

Der Stator enthält beispielsweise eine dreiphasige, symmetrische Drehstromwicklung, in die von der Regelung und dem Leistungsteil der Synchronmaschine Ströme mit jeweils 120° Phasenverschiebung eingeprägt werden, wie dies in Figur 2 für eine zweipolige Maschine dargestellt ist.

Die Summe der drei Ströme i1, i2 und i3 führt zu einer Stromdichte im Stator 1, die einmal positives und auf der gegenüberliegenden Seite negatives Vorzeichen hat.

Das durch die Stromdichte und die magnetische Flußdichte B erzeugte Drehmoment M ist dann maximal, wenn ein Magnetpol und ein unipolarer Stromdichtebereich übereinander liegen, wie in Figur 2a dargestellt.

Das erzeugte Drehmoment ist gleich Null, wenn jeweils die Hälfte des negativen und positiven Poles des Rotors 2 in einem unipolaren Stromdichtebereich des Stators 1 liegen, wie in Figur 2b dargestellt.

Um das erzeugte Drehmoment auch bei Rotordrehung maximal zu halten, ist es erforderlich, die Phase der Statorströme nachzuregeln, um zu jedem Zeitpunkt eine Konstellation der magnetischen Flußdichte B im Rotor 2 zu der Stromdichte im Stator 1 wie in Figur 2a dargestellt zu erreichen bzw. annähernd zu erreichen.

Zur Bestimmung der Phase der Statorströme ist es bekannt, die absolute Lage des Rotors im Stator zu bestimmen und aus dieser Rotorlage die Phase der Statorströme zur Erreichung des maximalen Drehmoments zu ermitteln.

Zur Erfassung der Lage des Rotors für die Kommutierung, d.h. die Nachführung der Phase der Ströme im Stator, ist es bekannt, sogenannte 6-Step-Geber vorzusehen, bei denen 6 Winkelbereiche des Rotors absolut festgelegt werden.
Entsprechend dem Winkelbereich, in dem sich der Rotor befindet, wird die Phase der Statorströme weitergeschaltet.

Eine andere Möglichkeit zur Kommutierung ist durch den Einsatz von Resolvern gegeben. Der Resolver ist ein Drehmelder, der in seinem Aufbau einem kleinen Synchronmotor ähnelt. Der Resolver weist einen zweipoligen Rotor mit einer Wicklung und einen Stator mit zwei, um 90° gegeneinander versetzten Wicklungen auf. Die Statorwicklungen werden mit jeweils der gleichen Sinusspannung, jedoch gegeneinander um 180° versetzt erregt. Im Rotor wird dadurch eine sinusförmige Meßspannung induziert. Diese Meßspannung weist einen Phasenverschiebungswinkel gegenüber einer der beiden Statorwicklungen auf, die dem Auslenkungswinkel der Rotorachse gegenüber dem Stator entspricht und gibt somit die Lage des Rotors im Stator an. Das erhaltene Signal wird für die Kommutierung ausgewertet.

Diese bekannten Verfahren weisen den Vorteil auf, daß mit einfachen Mitteln die Phasenweiterschaltung, d.h. die Kommutierung der Statorströme erreicht wird, wobei die Auflösung für die Kommutierung ausreichend ist.
Der Nachteil dieser Verfahren besteht jedoch darin, daß für die Kommutierung eine separate Meßanordnung notwendig ist, die zusätzlichen Platz beansprucht, was sich insbesondere bei Synchronmaschinen für kleinere Leistungen nachteilig auswirkt.

Eine gewisse Verbesserung in dieser Hinsicht ist durch den Einsatz von Inkrementalgebern gegeben, die zur Lageregelung eingesetzt werden und über zwei zusätzliche Kommutierungsspuren verfügen, die jeweils ein Sinus- und ein Cosinus-Signal pro Rotorumdrehung erzeugen. Durch die Division der Pegel beider Spuren und die Bildung des Arcustangens wird ein Signal gebildet, das der Rotorlage entspricht und das als Grundlage für die Nachregelung der Phase der Statorströme der Synchronmaschine verwendet wird.
Auch in diesem Fall kommen zwei Gebersysteme zur Anwendung, die zur Lageregelung und zur Kommutierung verwendet werden und eigene Anschlußvorrichtungen benötigen.

Aus EP 0 251 785 A2 ist ein Verfahren für die Anlaufphase und die Kommutierung eines bürstenlosen Gleichstrommotors bekannt. Zur Lageregelung wird ein angetriebener Disk benutzt, auf welchem Referenzpulssignale eingetragen sind. Beim Einschalten des bürstenlosen Gleichstrommotors wird eine Testanregung durchgeführt, mittels derer das maximal zu erreichende Drehmoment bestimmt wird.

Aus EP 0 517 393 A2 ist ein Verfahren bekannt, um einen Gleichstrommotor mit einem maximalen Drehmoment zu starten, wobei Lage des Rotors sowie die Stromanstiegszeit gemessen wird.

Die Aufgabe der vorliegenden Erfindung besteht deshalb darin, ein Verfahren für die Anlaufphase und die Kommutierung in Synchronmaschinen anzugeben, das ohne zusätzliche Gebereinrichtungen für die Kommutierung angewendet werden kann.

Diese Aufgabe wird ausgehend von einem gattungsgemäßen Verfahren nach dem Oberbegriff des Anspruches 1 durch die kennzeichnenden Merkmale des Anspruches 1 gelöst.
Vorteilhafte Ausgestaltungen der Erfindung sind in den abhängigen Ansprüchen angegeben.

Gemäß der Erfindung werden beim Einschalten der Synchronmaschine Testanregungen vorgenommen, bei denen die Drehstromwicklung mit verschiedenphasigen Strömen beaufschlagt wird und das dabei maximal erreichte Drehmoment bestimmt wird. Aus diesem maximalen Drehmoment wird die Phase für die Statorströme zu Beginn der ersten Umdrehung der Synchronmaschine bestimmt. Die Phase der Statorströme, bei der maximales Drehmoment bei den Testanregungen auftritt, bildet also den Kommutierungswinkel für die Synchronmaschine bis zum Auftreten des Referenzpulses. Bis zum Erkennen dieses Referenzpulssignales wird die Phase der Statorströme, also der Kommutierungswinkel, durch Bestimmung der relativen Lage des Rotors zum Stator vorgegeben. Nach Auswertung des Referenzpulssignales wird die absolute Lage des Rotors bestimmt und die mit der absoluten Lage umlaufende Phase der Statorströme wird aus der absoluten Lage des Rotors und einem für die Synchronmaschine vorgegebenen Offsetwinkel der Magnetisierungsrichtung des Rotors bestimmt.

Durch das erfindungsgemäße Verfahren erübrigen sich weitere Geber, die bei den bekannten Verfahren zur Kommutierung eingesetzt werden. Damit verringert sich auch die Zahl der Anschlüsse für die Weiterleitung der Signale. Da das erfindungsgemäße Verfahren einen ohnehin vorhandenen Inkrementalgeber mit Referenzpuls auch zur Kommutierung nutzt, ergeben sich nicht nur die Vorteile einer möglichen Verkleinerung der Synchronmaschine, sondern zusätzliche Kostenvorteile durch die Einsparung eines weiteren Gebersystems.

Gemäß einer vorteilhaften Ausgestaltung der Erfindung wird die Testanregung bei Einschalten der Synchronmaschine mit vier verschiedenen Phasenlagen für die Statorströme ausgeführt. Diese Phasenlagen sind im Bereich von 0° bis 180° gleichmäßig verteilt. Für den Fall, daß ein positives maximales Drehmoment bestimmt wird, wird die sich daraus ergebende Phasenlage ausgewählt. Bei negativem maximalen Drehmoment werden zu dieser Phasenlage noch 180° addiert.

Auf diese Weise kann mit einer kurzen Testanregung mit vier verschiedenphasigen Statorströmen die Phasenlage in acht mögliche Bereiche unterteilt werden, von denen der günstigste ausgewählt wird.

Eine weitere vorteilhafte Ausgestaltung der Erfindung sieht vor, daß bei der Testanregung die Amplitude der Statorströme so gewählt wird, daß ein Drehmoment erzeugt wird, das den Rotor zwar auslenkt, nicht aber in Bewegung versetzt. Bei dieser Form der Testanregung wird das maximale Drehmoment bestimmt, indem die maximale Auslenkung des Rotors gemessen wird.

Eine andere vorteilhafte Ausführung der Erfindung sieht vor, daß durch die Amplitude der Statorströme ein Drehmoment erzeugt wird, bei dem der Rotor in Drehung versetzt wird. In diesem Fall wird die Drehzahldifferenz zwischen dem Beginn und dem Ende eines Testzyklus mit der jeweiligen Phasenlage des Statorstromes gemessen, um das maximale Drehmoment zu bestimmen.

Es hat sich weiterhin als vorteilhaft erwiesen, einen Inkrementalgeber zu verwenden, der zwei Spuren aufweist und somit für jedes Inkrement ein Sinus- und ein Cosinus-Signal erzeugt. Mit einem derartigen Inkrementalgeber kann zum einen die Drehrichtung erkannt werden, zum anderen wird die Auflösung des Inkrementalgebers erhöht, indem die Pegel beider Spuren (Sinusspur und Cosinusspur) dividiert und der Arcustangens gebildet wird. Es kann also auch die Position zwischen zwei Strichinkrementen bestimmt werden, was zu der höheren Auflösung führt.

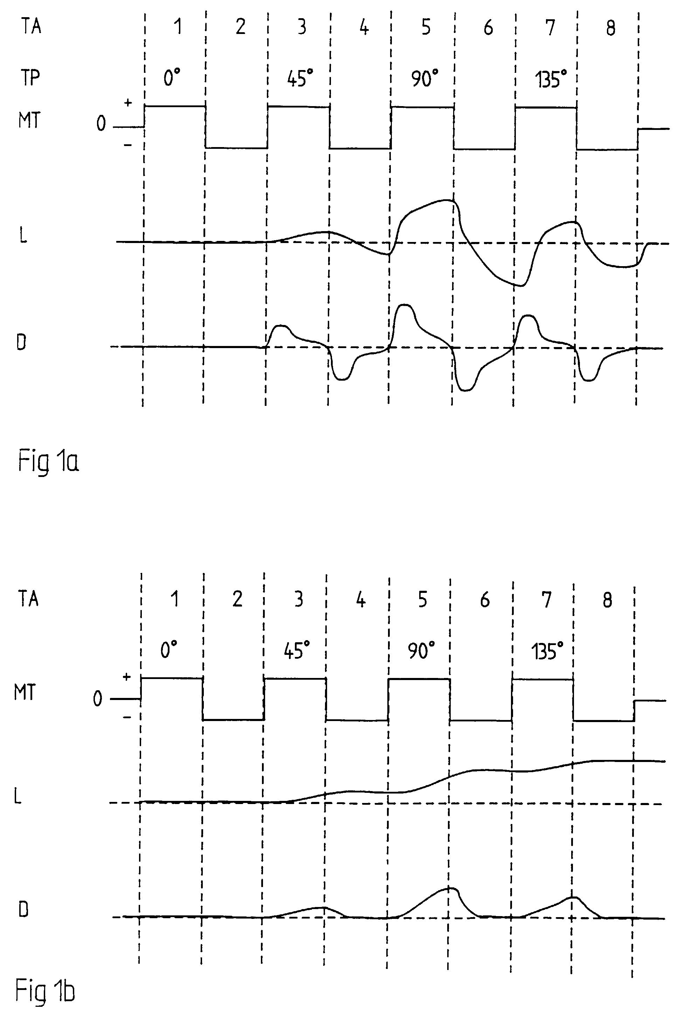

Im folgenden wird die Erfindung an Hand eines Ausführungsbeispieles nach Figur 1 beschrieben.

Es zeigen:
- Figur 1a:: Ein Diagramm für den Testablauf mit Lageauswertung
- Figur 1b:: Ein Diagramm für den Testablauf mit Drehzahlauswertung
- Figur 2 :: Die Lage des Rotors im Stator einer Synchronmaschine bei maximalem und minimalem Drehmoment

Gemäß Figur 1a ist die Testanregung TA in 8 Testabschnitte entsprechend der ersten Diagrammzeile eingeteilt. Die Testanregung wird mit vier verschiedenen Testphasen TP für die Drehstromwicklung des Stators vorgenommen. Im vorliegenden Beispiel wird mit den Phasen 0°, 45°, 90° und 135° angeregt. Für jede Testphase wird ein positives und ein negatives Solldrehmoment MT ausgegeben, so daß für die Anregung mit einer Testphase jeweils zwei Testabschnitte benötigt werden. In der vierten Zeile des Diagramms nach Figur 1a ist die Lage L des Rotors während der jeweiligen Testabschnitte dargestellt. Die letzte Zeile des Diagramms gibt die Drehzahl D an.

Bei der Testanregung, wie sie in Figur 1a dargestellt ist, erfolgt die Anregung mit einem Drehmoment, bei dem der Rotor nur ausgelenkt, nicht aber in eine Drehbewegung versetzt wird. Zur Bestimmung des maximalen Drehmomentes werden die Lagedifferenzen zwischen zwei Testanregungen mit positivem und negativem Drehmoment MT bei gleichem Phasenwinkel TP der Drehströme bestimmt. So wird beispielsweise die Reaktion für die Testphase 90° bestimmt, indem die Differenz aus der Lage L des Rotors am Ende des Testabschnittes 5 und des Testabschnittes 6 gebildet wird. Am Ende der Testanregung führt die größte Lagedifferenz zum optimalen Phasenwinkel für die Statorströme.

In dem Fall, daß die maximale Lagedifferenz einen negativen Wert hat, sind zum optimalen Phasenwinkel noch 180^{o} zu addieren.

In der Figur 1a ist ergänzend noch der Verlauf der Drehzahl, der durch Differentiation des Lageverlaufes L gewonnen werden kann, dargestellt. Der Drehzahlverlauf zeigt, daß bei Beginn der Testabschnitte, bei denen ein Drehmoment erzeugt wird, die Drehzahl schnell (in positiver oder negativer Richtung) ansteigt und dann gegen Ende des Testabschnittes, bei Erreichen der für den Testabschnitt maximalen Auslenkung, gegen Null geht.

Die Figur 1b zeigt ein Diagramm, das im Aufbau dem nach Figur 1a entspricht, für den Fall, daß die Synchronmaschine vollkommen leer läuft und somit der Rotor in Drehung versetzt wird. In diesem Fall wird nicht mehr die Lage des Rotors, sondern die Drehzahl ausgewertet, indem die Drehzahldifferenz zwischen dem Ende und dem Anfang der einzelnen Testabschnitte ausgewertet wird. Da es sich hier um Beschleunigungsvorgänge handelt, werden keine stationären Endwerte erreicht. Während bei der Anregung mit positivem Drehmoment MT in den Testabschnitten 1, 3, 5 und 7 sich die Drehzahl erhöht, bewirkt das negative Drehmoment in den Testabschnitten 2, 4, 6 und 8 ein Abbremsen der Bewegung, so daß am Ende der Testabschnitte die Drehzahl nahe Null geht.

Bei einer Testanregung mit vier verschiedenen Phasenlagen entsteht ein maximaler Fehler, wenn das tatsächliche Maximum der Drehmomentamplitude genau zwischen zwei Testwinkeln liegt. Die maximale Abweichung von der optimalen Phasenlage beträgt also 22,5^{o}. Der Cosinuns von 22,5^{o} beträgt 0,92, so daß die Drehmomentreduzierung in diesem ungünstigsten Fall 8% beträgt. In der Anlaufphase, d.h. bis zur Bestimmung der absoluten Lage nach spätestens einer Umdrehung ist dieser Wert vernachlässigbar.

Im laufenden Betrieb, also nach Bestimmung der Absolutlage des Rotors durch Auswertung eines Referenzimpulses, erfolgt die Bestimmung der Phasenlage der Drehströme in Abhängigkeit der Rotorlage (Kommutierung) nach einer festen Beziehung.
Der umlaufende Winkel für die Kommutierung wird gebildet aus einem fest vorgegebenen Offset-Winkel zwischen der absoluten Lage des Rotors und der Magnetisierungsrichtung des Rotors und der berechneten Lage des Rotors nach Auswertung des Referenzpulses.

## Patentansprüche

1. Verfahren für die Anlaufphase und die Kommutierung in Synchronmaschinen mit einem Rotor, der mit einer räumlich festen Magnetisierung versehen ist, einem Stator mit Drehstromwicklung und einem Inkrementalgeber mit einem Referenzpulssignal zur Lageregelung und Hochauflösung der Lagebestimmung, dadurch gekennzeichnet, daß
- beim Einschalten der Synchronmaschine eine Testanregung vorgenommen wird, bei der die Drehstromwicklung mit Strömen verschiedener Phasenlage beaufschlagt wird und das dabei maximal erreichte Drehmoment bestimmt wird,
- aus dem maximalen Drehmoment die Phase für die Statorströme zu Beginn der ersten Umdrehung der Synchronmaschine bestimmt wird,
- bis zum Erkennen des Referenzpulssignales die Phase der Statorströme durch Bestimmung der relativen Lage des Rotors zum Stator vorgegeben wird, und
- nach Auswertung des Referenzpulssignales die absolute Lage des Rotors bestimmt wird und die mit der absoluten Lage umlaufende Phase der Statorströme aus der absoluten Lage des Rotors und einem für die Synchronmaschine vorgegebenen Offsetwinkel der Magnetisierungsrichtung des Rotors bestimmt wird.

2. Verfahren nach Anspruch 1, dadurch gekennzeichnet, daß die Testanregung bei Einschalten der Synchronmaschine mit vier verschiedenen Phasenlagen für die Statorströme erfolgt, wobei diese Phasenlagen im Bereich von 0° bis 180° gleichmäßig verteilt sind und im Falle eines positiven maximalen Drehmomentes die entsprechende Phasenlage ausgewählt wird und im Falle eines negativen maximalen Drehmomentes zur entsprechenden Phasenlage noch 180° addiert werden.

3. Verfahren nach Anspruch 1 oder 2, dadurch gekennzeichnet, daß die Testanregung mit einer Amplitude der Statorströme durchgeführt wird, die ein Drehmoment erzeugt, bei dem der Rotor ausgelenkt wird, und als Maß für das erzeugte Drehmoment die Auslenkung des Rotors bestimmt wird.

4. Verfahren nach Anspruch 1 oder 2, dadurch gekennzeichnet, daß die Testanregung mit einer Amplitude der Statorströme durchgeführt wird, die ein Drehmoment erzeugt, bei dem der Rotor in Bewegung versetzt wird und als Maß für das erzeugte Drehmoment die Drehzahldifferenz zwischen dem Ende und dem Anfang eines Testzyklus mit einer Testphase bestimmt wird.

5. Verfahren nach einem der Ansprüche 1 bis 4, dadurch gekennzeichnet, daß der Inkrementalgeber zwei um 90° verschobene Spuren aufweist, die für jedes Inkrement ein Sinus- und ein Cosinus-Signal erzeugen.

## Claims

1. Method for starting up and commutating synchronous machines with a rotor, which is provided with spatially fixed magnetisation, a stator with three-phase winding and an incremental encoder with a reference pulse signal for position control and high resolution of position determination, **characterised in that**
- when the synchronous machine is switched on, a test excitation is carried out, in which currents of a different phase position are applied to the three-phase winding and the
maximum torque reached is determined,
- from the maximum torque, the phase for the stator currents at the start of the first revolution of the synchronous machine is determined,
- up to the recognition of the reference pulse signal, the phase of the stator currents is predetermined by determining the relative position of the rotor to the stator, and
- after evaluation of the reference pulse signal, the absolute position of the rotor is determined and the phase of the stator currents, which rotates with the absolute position, is determined from the absolute
position of the rotor and an offset angle,
predetermined for the synchronous machine, of the magnetising direction of the rotor.

2. Method according to claim 1, **characterised in that** the test excitation on switching on the synchronous machine occurs with four different phase positions for the stator currents, these phase positions being evenly distributed in the range between 0° and 180°, and in the case of a positive maximum torque the corresponding phase position is selected, and in the case of a negative maximum torque a further 180° are added to the corresponding phase position.

3. Method according to claim 1 or 2, **characterised in that** the test excitation is carried out with an amplitude of the stator currents which generates a torque in which the rotor is deflected, and the deflection of the rotor is determined as a measurement for the torque generated.

4. Method according to claim 1 or 2, **characterised in that** the test excitation is carried out with an amplitude of the stator currents which generates a torque in which the rotor is set in motion and the speed difference between the end and the beginning of a test cycle is determined with a test phase as a measurement for the torque generated.

5. Method according to one of claims 1 to 4, **characterised in that** the incremental encoder has two tracks offset by 90°, which generate for each increment a sine and a cosine signal.

## Revendications

1. Procédé pour le démarrage et la commutation de machines synchrones comportant un rotor avec une magnétisation fixe dans l'espace, un stator avec un enroulement triphasé et un capteur incrémental avec un signal impulsionnel de référence pour réguler la position et déterminer la position avec une résolution élevée, caractérisé par le fait
- que lors de la mise sous tension de la machine synchrone, on procède à une excitation de test au cours de laquelle on alimente l'enroulement triphasé avec des courants ayant différentes positions de phase et on mesure le couple maximal obtenu,
- qu'à partir du couple maximal on détermine la phase pour les courants de stator au début de la première rotation de la machine synchrone,
- que jusqu'à la détection du signal impulsionnel de référence on fixe la phase des courants de stator en déterminant la position relative du rotor par rapport au stator et
- qu'après l'exploitation du signal impulsionnel de référence, on détermine la position absolue du rotor et on détermine la phase des courants de stator qui tourne avec la position absolue du rotor à partir de la position absolue du rotor et d'un angle de décalage de la direction de magnétisation prédéterminé pour la machine synchrone.

2. Procédé selon la revendication 1, caractérisé par le fait qu'on réalise l'excitation de test lors de la mise sous tension de la machine synchrone avec quatre positions de phase différentes, lesdites positions de phase étant réparties de manière régulière dans la plage allant de 0° à 180° et que, dans le cas d'un couple maximal positif on sélectionne la position de phase correspondante et dans le cas d'un couple maximal négatif on ajoute 180° à la position de phase concernée.

3. Procédé selon la revendication 1 ou 2, caractérisé par le fait qu'on réalise l'excitation de test avec une amplitude des courants de stator qui produit un couple pour lequel le rotor est décalé et on détermine le décalage du rotor en tant que mesure du couple produit.

4. Procédé selon la revendication 1 ou 2, caractérisé par le fait qu'on réalise l'excitation de test avec une amplitude des courants de stator qui produit un couple pour lequel le rotor est mis en mouvement et on détermine comme mesure pour le couple produit, la différence de vitesse entre la fin et le début d'un cycle de test avec une phase de test.

5. Procédé selon une des revendications 1 à 4, caractérisé par le fait que le capteur incrémental comporte deux pistes décalées de 90° qui produisent un signal sinus et un signal cosinus pour chaque incrément.
